Europäisches Patentamt

European Patent Office

Office européen des brevets

(19)

(11) Veröffentlichungsnummer : **0 178 736**
**B1**

(12) # EUROPÄISCHE PATENTSCHRIFT

(45) Veröffentlichungstag der Patentschrift :
**17.05.89**

(51) Int. Cl.⁴ : **C 03 C 25/02**

(21) Anmeldenummer : **85201669.0**

(22) Anmeldetag : **11.10.85**

(54) Verfahren zum Herstellen einer optischen Faser mit einer Kunststoffbedeckung.

(30) Priorität : **18.10.84 NL 8403179**

(43) Veröffentlichungstag der Anmeldung :
**23.04.86 Patentblatt 86/17**

(45) Bekanntmachung des Hinweises auf die Patenterteilung : **17.05.89 Patentblatt 89/20**

(84) Benannte Vertragsstaaten :
**DE FR GB IT NL SE**

(56) Entgegenhaltungen :
**EP-A- 0 112 222**
**EP-A- 0 140 415**
**FR-A- 2 476 634**
**GB-A- 2 091 590**

(73) Patentinhaber : **N.V. Philips' Gloeilampenfabrieken**
**Groenewoudseweg 1**
**NL-5621 BA Eindhoven (NL)**

(72) Erfinder : **Broer, Dirk Jan**
**p/A INT. OCTROOIBUREAU B.V. Prof. Holstlaan 6**
**NL-5656 AA Eindhoven (NL)**

(74) Vertreter : **Pennings, Johannes et al**
**Internationaal Octrooibureau B.V. Prof. Holstlaan 6**
**NL-5656 AA Eindhoven (NL)**

## Beschreibung

Die Erfindung bezieht sich auf ein Verfahren zum Herstellen einer optischen Faser mit einer Kunststoffbedeckung, die aus mindestens zwei Schichten besteht, wobei nach diesem Verfahren die optische Faser unmittelbar nach der Bildung mit zwei Kunststoffschichten versehen wird, wobei die zweite Kunststoffschicht aus einer härtbaren Kunststoffzusammensetzung gebildet wird, die durch Bestrahlung mit Elektronen oder mit UV-Licht zum Aushärten gebracht wird.

Die optische Faser kann auf bekannte Weise gebildet werden, beispielsweise dadurch, dass sie aus einer Vorform gezogen oder nach dem Doppeltiegelverfahren gebildet wird. Mit dem Ausdruck « unmittelbar nach der Bildung » wird gemeint, dass die optische Faser nach der Bildung nicht gelagert, auf eine Rolle gewickelt, an einem Führungsrad entlanggeführt oder auf eine andere Art und Weise behandelt wird, bevor die Kunststoffbedeckung angebracht ist.

Die Erfindung kann beispielsweise bei optischen Glasfasern für Fernmeldezwecke angewandt werden. Dabei ist es bekannt, eine Kunststoffbedeckung zu verwenden, die aus zwei Schichten besteht. Die erste verhältnismässig weiche Schicht dient dazu, geringfügige Biegungen der optischen Faser zu vermeiden, die infolge von Temperaturschwankungen oder Biegungen des Kabels, in dem die optische Faser vorhanden ist, auftreten können. Die zweite härtere Schicht dient dazu, eine Beschädigung der optischen Faser zu vermeiden.

Eine derartige optische Faser und ein Verfahren zum Herstellen derselben sind beispielsweise in der DE-A1-31 06 451 beschrieben. Dabei bestehen die erste sowie die zweite Kunststoffschicht aus flüssigen härtbaren Kunststoffzusammensetzungen. Die erste Kunststoffschicht wird durch Bestrahlung mit UV-Licht zum Aushärten gebracht, wonach die zweite Kunststoffschicht angebracht und ihrerseits ausgehärtet wird. Um eine Beschädigung der optischen Faser zu vermeiden, darf es mit der optischen Faser keinen mechanischen Kontakt geben, bevor mindestens eine umhüllende Schicht auf der optischen Faser angebracht ist. Auch darf es keinen mechanischen Kontakt mit der härtbaren Kunststoffzusammensetzung auf der optischen Faser geben, bis die Kunststoffzusammensetzung in ausreichendem Masse ausgehärtet ist. Das Aushärten unter dem Einfluss von Bestrahlung ist in vielen Fällen der geschwindigkeitsbestimmende Schritt beim Herstellen optischer Fasern. Die zum Erhalten einer nicht klebenden Schicht erforderliche Zeit ist im allgemeinen länger als 0,5 Sekunde und oft länger als 5 Sekunden. Andererseits wird beabsichtigt, beispielsweise beim Ziehen einer Glasfaser aus einer Vorform, eine Geschwindigkeit über 5 m/s zu erreichen. Wenn nun die beiden Kunststoffschichten aus härtbaren Kunststoffzusammensetzungen gebildet werden, ist es notwendig, eine Vorrichtung zum Herstellen und zum Bedecken einer optischen Faser mit unwirtschaftlich grossen Abmessungen zu verwenden.

Die Erfindung hat nun die Aufgabe, ein Verfahren und eine optische Faser zu schaffen, wobei das Verfahren eine grosse Bedeckungsgeschwindigkeit der optischen Faser ermöglicht und wobei die optische Faser die guten Eigenschaften einer aus zwei Schichten bestehenden Kunststoffbedeckung erhält. Die Erfindung hat ausserdem die Aufgabe, eine optische Faser zu schaffen, die dazu geeignet ist, unter Erhöhung der Temperatur weiterverarbeitet zu werden.

Diese Aufgabe wird nach der Erfindung durch ein Verfahren, wie dies eingangs beschrieben wurde, gelöst, wobei die erste Kunststoffschicht aus einem geschmolzenen Kunststoff gebildet wird, der mindestens zwei Akrylatestergruppen je Molekül aufweist, wobei die zweite Kunststoffschicht angebracht wird, nachdem die erste Kunststoffschicht durch Abkühlung fest geworden ist und wobei die erste Kunststoffschicht zusammen mit der zweiten Kunststoffschicht durch Bestrahlung zum Aushärten gebracht wird. Vorzugsweise wird als geschmolzener Kunststoff eine Polyurethanakrylatverbindung verwendet.

Die grosse Bedeckungsgeschwindigkeit, die bei Verwendung eines geschmolzenen Kunststoffes erreicht wird, ist möglich, weil von einem fertigen Polymerwerkstoff ausgegangen wird. Es muss nur dafür gesorgt werden, dass die Temperatur der ersten Kunststoffschicht niedriger ist als die Schmelztemperatur des verwendeten Kunststoffes, bevor es mit der optischen Faser einen mechanischen Kontakt gibt und bevor die zweite Kunststoffschicht angebracht wird. Bei Verwendung einer flüssigen härtbaren Kunststoffzusammensetzung muss ein derartiger Kontakt vermieden werden und kann eine zweite Schicht erst angebracht werden, nachdem die Polymerisationsreaktion, die durch die Bestrahlung initiiert wird, in ausreichendem Masse fortgeschritten ist. Dies führt zu einem grossen Abstand zwischen dem ersten und dem zweiten Bedeckungspunkt. Weil nach der Erfindung das weitere Aushärten der ersten Kunststoffschicht gleichzeitig mit dem Aushärten der zweiten Kunststoffschicht erfolgt, ist dazu kein zusätzlicher Raum notwendig.

Das erfindungsgemässe Verfahren bietet den hinzukommenden Vorteil, dass durch Fortfallen eines Bestrahlungsschrittes, beispielsweise von der UV-Lichtquelle oder der Elektronenbestrahlungsanordnung ein wirtschaftlicherer Gebrauch gemacht wird.

Weiterhin weist ein geschmolzener Kunststoff beim Aushärten wenig Polymerisationsschrumpf auf, weil der geschmolzene Kunststoff bereits vor dem Aushärten ein hohes Molekulargewicht hat. Dies vermeidet das Entstehen mechanischer Spannungen in der ersten Kunststoffschicht.

Das einmalige Bestrahlen mit UV-Licht, nachdem diese zwei Schichten angebracht sind, bietet zusätzliche Vorteile, wenn eine optische Faser verwendet wird, die hauptsächlich aus Quarz oder Quarzglas besteht, weil nun die Gefahr eines chemischen Abbaus des Quarzes bzw. des Quarzglases unter dem Einfluss der UV-Strahlung verringert wird.

Ein anderer hinzukommender Vorteil ist, dass bei gleichzeitigem Aushärten der beiden Kunststoffschichten eine Verknüpfung der Polymermoleküle der beiden Schichten auftreten kann, wodurch die gegenseitige Haftung der Kunststoffschichten zumindest mit der Folge einer grösseren Stärke der ganzen optischen Faser.

Aus der US-Patentschrift 4 147 407 ist zwar ein Verfahren bekannt, bei dem eine optische Faser mit einer Verkleidung versehen wird, indem die optische Faser durch einen geschmolzenen Kunststoff hindurchgeführt wird, wonach der Kunststoff durch Abkühlung fest wird. Dabei wird die optische Faser jedoch nicht mit einer zweiten Kunststoffschicht versehen. Auch wird der geschmolzene Kunststoff nach Abkühlung nicht weiter durch Bestrahlung ausgehärtet.

In der Patentanmeldung EP-A-112 222 ist ein Verfahren zum Herstellen einer mit zwei Schichten versehenen optischen Faser offenbart, wobei die erste Schicht aus einem Material mit hoher Steifigkeit auf der Faser gebildet wird. Nachdem die erste Schicht fest geworden ist wird eine zweite Schicht angebracht und verfestigt. Die erste, harte Schicht dient dazu eine Torsionsspannung in der Faser zu fixieren. Die erste Schicht ist nicht eine verhältnismässig weiche Schicht und wird nicht zusammen mit der zweiten Schicht durch Bestrahlung zum Aushärten gebracht.

Bei weiterer Verarbeitung und Lagerung der optischen Faser kann es notwendig sein, dass die Kunststoffverkleidung gegen Temperaturerhöhungen beständig ist, beispielsweise, wenn die optische Faser noch mit einem Mantel aus einem thermoplastischen Kunststoff versehen werden muss. Eine Verbesserung wird erreicht, wenn die optische Faser unmittelbar nach der Bildung mit einer Schicht aus einem geschmolzenen Kunststoff umgeben wird, der mindestens zwei Akrylatestergruppen je Molekül aufweist, wonach die Schicht durch Abkühlung verfestigt und daraufhin durch Bestrahlung weiter ausgehärtet wird. Im allgemeinen wird jedoch aus den obengenannten Gründen eine Kunststoffbedeckung bevorzugt, die aus mindestens zwei Schichten mit unterschiedlichen mechanischen Eigenschaften besteht.

Um die Benetzung der optischen Faser durch den geschmolzenen Kunststoff weiter zu verbessern, ist es zweckmässig, dass der geschmolzene Kunststoff 0,1 bis 2 Gew.% Aluminiumstearat aufweist.

Die beiden Kunststoffschichten können durch Bestrahlung mit Elektronen zum Aushärten gebracht werden. In diesem Fall ist es nicht notwendig, dass der geschmolzene Kunststoff oder die härtbare Kunststoffzusammensetzung einen Initiator aufweist. Die Kunststoffschichten können beispielsweise durch Bestrahlung mit Elektronen mit einer Energie von 100 bis 500 keV zum Aushärten gebracht werden. Dazu ist beispielsweise eine « Electrocurtain »-Anlage geeignet (ein Erzeugnis von Energy Sciences Inc., Woburn, Massachusetts).

In einer anderen bevorzugten Ausführungsform des erfindungsgemässen Verfahrens weist der geschmolzene Kunststoff einen lichtempfindlichen Initiator auf und werden die beiden Kunststoffschichten durch Bestrahlung mit UV-Licht zum Aushärten gebracht. In einer geeigneten Ausführungsform dieses Verfahrens weist der geschmolzene Kunststoff 1 bis 5 Gew.% des lichtempfindlichen Initiators auf, der aus der Gruppe gewählt ist, die durch 2,2-Dimethoxy-2-phenyl-azetophenon, 2,2-Diethoxy-azetophenon und 2,2-Dimethyl-2-hydroxy-azetophenon gebildet wird. Zur UV-Bestrahlung ist beispielsweise eine Hochdruckquecksilberdampfentladungslampe geeignet, die Licht mit Wellenlängen zwischen 200 und 400 nm erzeugt, mit einer Intensität, gemessen auf den Kunststoffschichten, von 0,6 W/cm$^2$.

Das erfindungsgemässe Verfahren kann mit besonderem Vorteil zum Herstellen einer optischen Faser angewandt werden, die gegen eine weitere Verarbeitung, beispielsweise Verkabelung, beständig sein soll. So kann beispielsweise durch Extrusion ein Mantel aus einem thermoplastischen Kunststoff, beispielsweise Polyamid, um die optische Faser angebracht werden, wobei dieser Mantel die optische Faser unmittelbar kontaktiert oder die Faser wie eine Röhre umgibt.

Ausführungsbeispiele des Verfahrens und der optischen Faser nach der Erfindung sind in der Zeichnung dargestellt und werden im folgenden näher beschrieben. Es zeigen :

Fig. 1 eine schematische Darstellung einer Vorrichtung zum Anwenden des erfindungsgemässen Verfahrens,

Fig. 2 eine Polyurethanakrylatverbindung, die bei Raumtemperatur eine feste Form hat,

Fig. 3 eine Polyurethanakrylatverbindung, die bei Raumtemperatur eine flüssige Form hat,

Fig. 4a 2,2-Dimethoxy-2-phenyl-azetophenon,

Fig. 4b 2,2-Dimethoxy-azetophenon,

Fig. 4c 2,2-Dimethyl-2-hydroxy-axetophenon, und

Fig. 5 einen Schnitt durch eine mögliche Ausführungsform der Erfindung, eine optische Faser mit einer Kunststoffbedeckung und einem Mantel aus einem thermoplastischen Kunststoff.

Ausführungsbeispiel des erfindungsgemässen Verfahrens :

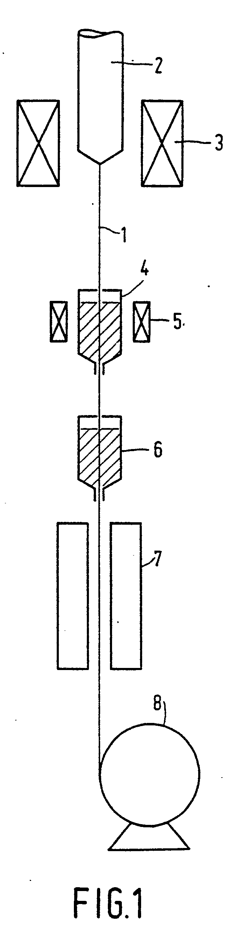

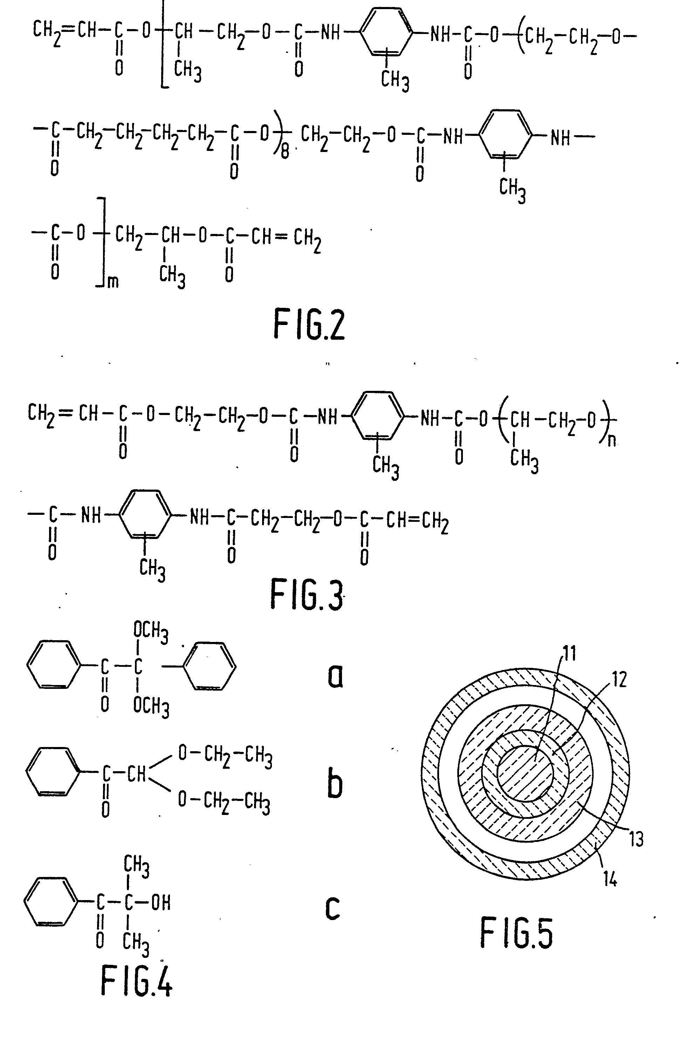

Fig. 1 zeigt auf schematische Weise eine Vorrichtung, die sich zum Anwenden des Verfahrens eignet. Eine Glasfaser 1 wird auf bekannte Weise durch Ziehen aus einer Vorform 2 in einem Ofen 3 gebildet. Unmittelbar nach dem Bilden der Glasfaser wird darauf eine Schicht aus einem geschmolzenen Kunststoff angebracht. Dazu werden an sich bekannte Mittel verwendet, wie eine Bedeckungsvorrichtung 4 mit einer Heizvorrichtung 5. Ein geeigneter geschmolzener Kunststoff ist beispielsweise die Polyurathanakrylatverbindung, die in Fig. 2 dargestellt ist, in der der Mittelwert von m zwischen 2 und 3 liegt. Ein handelsüblicher Kunststoff dieser Art ist Uvithane 782® von Thiokol Speciality Chemicals Division, mit einem mittleren Molekulargewicht von 4760. Der Schmelzpunkt dieses Kunststoffes beträgt 35 °C, die Glasübergangstemperatur, gemessen mit einer Torsionspendelvorrichtung, beträgt — 35 °C. Der Kunststoff wird bei einer Temperatur von 80 °C auf der Glasfaser angebracht, die Viskosität des geschmolzenen Kunststoffes beträgt dabei 12 Pa.s. Dem geschmolzenen Kunststoff sind weiterhin 4 Gew.% 2,2-Dimethoxy-2-phenyl-azetophenon (siehe Fig. 4a) und 1 Gew.% Aluminiumstearat hinzugefügt. Auch die anderen lichtempfindlichen Initiatoren, wie beispielsweise 2,2-Diethoxy-azetophenon (Fig. 4b) und 2,2-Dimethyl-2-hydroxy-azetophenon (Fig. 4c) sind geeignet. Nach dem Anbringen des geschmolzenen Kunststoffes auf der optischen Faser wird diese abgekühlt, wodurch der Kunststoff fest wird.

Auch andere geschmolzene Kunststoffe eignen sich dazu, in dem Verfahren nach der Erfindung angewandt zu werden, insofern sie sich dazu eignen, durch Bestrahlung ausgehärtet zu werden. Vorzugsweise wird ein Kunststoff gewählt mit einem Schmelzpunkt, der nur etwas über Raumtemperatur liegt, so dass die Anbringungstemperatur niedrig ist und die Abkühlungszeit kurz. Ausserdem wird thermische Polymerisation vermieden. Bei Verfahren nach dem Stand der Technik, wobei ein geschmolzener Kunststoff auf einer optischen Faser angebracht wird, ist der Schmelzpunkt im allgemeinen höher, um eine gute Haltbarkeit der optischen Faser mit Kunststoffbedeckung zu gewährleisten. Weil nach der Erfindung der Kunststoff später noch ausgehärtet wird, ist letztere Anforderung weniger von Bedeutung geworden.

Danach wird auf der optischen Faser mit der ersten Kunststoffschicht eine Schicht aus einer härtbaren Kunststoffzusammensetzung mit Hilfe einer Bedeckungsvorrichtung 6 angebracht. Die härtbare Kunststoffzusammensetzung wird daraufhin unter Bildung der zweiten Kunststoffschicht ausgehärtet. Eine geeignete härtbare Kunststoffzusammensetzung wird durch die Polyurathanakrylatverbindung gebildet, die in Fig. 3 dargestellt ist (70 Gew.%) in der n im Schnitt 20 beträgt, wobei dieser Verbindung 15 Gew.% Trimethylol-propantriakrylat, 10 Gew.% Tripropylenglykoldiakrylat, 4 Gew.% 2,2-Dimethoxy-2-phenyl-azetophenon (Fig. 4a) und 1 Gew.% Triäthanolamin (als Beschleuniger) hinzugefügt sind. Auch andere Kunststoffzusammensetzungen sind geeignet, wie beispielsweise Polyepoxyakrylatverbindungen, Polyesterakrylatverbindungen und Polyätherakrylatverbindungen, denen beispielsweise Hexandioldiakrylat hinzugefügt ist. Auch im Handel erhältliche Kunststoffzusammensetzungen wie DeSolite 950 × 042® oder DeSolite — 950 × 078® von DeSoto, Inc., sind dazu geeignet, in dem Verfahren nach der Erfindung angewandt zu werden. Dies sind UV-härtbare Kunststoffzusammensetzungen auf Basis vom Polyurathanakrylatverbindungen.

Die härtbare Kunststoffzusammensetzung wird zusammen mit der ersten Kunststoffschicht durch Bestrahlung mit einer Hochdruckquecksilberdampfentladungslampe 7, die UV-Licht mit Wellenlängen von 200 bis 400 nm und einer Intensität von 0,6 W/cm², gemessen auf den Kunststoffschichten, erzeugt, innerhalb 0,5 Sekunde zum Aushärten gebracht. Nach dem Aushärten der Kunststoffbedeckung kann die optische Faser auf einer Rolle 8 aufgewickelt werden.

Um die optische Faser herum kann weiterhin noch ein Mantel aus einem thermoplastischen Kunststoff angebracht werden, beispielsweise aus Nylon, Polyvinylidenfluorid oder Polybutylenterephtalat. Ein derartiger Mantel kann die optische Faser mit der Kunststoffbedeckung in direktem Kontakt umhüllen. Der Mantel kann andererseits auch eine Röhre bilden, in der sich die optische Faser frei bewegen kann.

Ausführungsbeispiel einer optischen Faser nach der Erfindung

Fig. 5 zeigt einen Schnitt durch eine optische Glasfaser 11 mit einer Kunststoffbedeckung, die aus zwei Schichten 12 und 13 und einem Mantel 14 aus einem thermoplastischen Kunststoff besteht, der die optische Faser wie eine Röhre umhüllt. Die Schicht 12 ist aus einem geschmolzenen Kunststoff, die Schicht 13 aus einer härtbaren Kunststoffzusammensetzung gebildet. Geeignete Abmessungen sind beispielsweise : Eine Glasfaser mit einem Durchmesser von 125 µm, die Schichten 12 und 13 mit einer Schichtdicke von je 30 µm und ein Mantel mit einem Durchmesser von 1 mm und einer Wandstärke von 150 µm.

Die Glasfaser 11 kann aus einem Kern und einem Mantel (in Fig. 5 nicht dargestellt) mit einer unterschiedlichen Brechzahl bestehen, aber die Glasfaser kann auch von dem Typ sein, in dem die Brechzahl als Funktion des Abstandes von der Achse der Faser sich allmählich ändert. Die in Fig. 5 dargestellte Faser hat einen kreisförmigen Querschnitt, dieser Querschnitt kann aber auch eine beliebige andere Form haben, beispielsweise die einer Ellipse.

Das erfindungsgemässe Verfahren und die damit hergestellte optische Faser beschränken sich nicht auf die obenstehend beschriebenen Beispiele. So wird die zweite Kunststoffschicht im allgemeinen aus einer flüssigen härtbaren Kunststoffzusammensetzung gebildet werden, aber im Rahmen der Erfindung ist es auch möglich, dazu einen härtbaren geschmolzenen Kunststoff einer vergleichbaren Art, wie für die erste Kunststoffschicht, aber mit der gewünschten grösseren Starrheit und Härte nach dem Aushärten, zu verwenden.

**Patentansprüche**

1. Verfahren zum Herstellen einer optischen Faser mit einer Kunststoffbedeckung, die aus mindestens zwei Schichten besteht, wobei nach diesem Verfahren die optische Faser unmittelbar nach der Bildung mit zwei Kunststoffschichten versehen wird, wobei die zweite Kunststoffschicht aus einer härtbaren Kunststoffzusammensetzung gebildet wird, die durch Bestrahlung mit Elektronen oder mit UV-Licht zum Aushärten gebracht wird, dadurch gekennzeichnet, dass die erste Kunststoffschicht aus einem geschmolzenen Kunststoff gebildet wird, der mindestens zwei Akrylatestergruppen je Molekül aufweist, wobei die zweite Kunststoffschicht angebracht wird, nachdem die erste Kunststoffschicht durch Abkühlung fest geworden ist und wobei die erste Kunststoffschicht zusammen mit der zweiten Kunststoffschicht durch Bestrahlung zum Aushärten gebracht wird.

2. Verfahren nach Anspruch 1, dadurch gekennzeichnet, dass als geschmolzener Kunststoff eine Polyurethanakrylatverbindung verwendet wird.

3. Verfahren nach Anspruch 1 oder 2, dadurch gekennzeichnet, dass der geschmolzene Kunststoff 0,1 bis 2 Gew.% Aluminiumstearat aufweist.

4. Verfahren nach einem der Ansprüche 1 bis 3, dadurch gekennzeichnet, dass die beiden Kunststoffschichten durch Bestrahlung mit Elektronen zum Aushärten gebracht werden.

5. Verfahren nach einem der Ansprüche 1 bis 3, dadurch gekennzeichnet, dass der geschmolzene Kunststoff einen lichtempfindlichen Initiator aufweist und dass die beiden Kunststoffschichten durch Bestrahlung mit UV-Licht zum Aushärten gebracht werden.

6. Verfahren nach Anspruch 5, dadurch gekennzeichnet, dass der geschmolzene Kunststoff 1 bis 5 Gew.% des lichtempfindlichen Initiators aufweist, der aus der Gruppe gewählt ist, die durch 2,2-Dimethoxy-2-phenyl-azetophenon, 2,2-Diethoxy-azetophenon und 2,2-Dimethyl-2-hydroxy-azetophenon gebildet wird.

## Claims

1. A method of manufacturing an optical fibre having a synthetic resin coating which consists of at least two layers, according to which method the optical fibre is enveloped with two synthetic resin layers immediately after it has been formed, the second synthetic resin layer being formed from a curable synthetic resin composition which is made to cure by exposing it to electrons or to UV-light, characterized in that the first synthetic resin layer is formed from a molten synthetic resin material which comprises at least two acrylate ester groups per molecule, and the second synthetic resin layer is applied after the first layer has cooled and solidified, the two layers being cured simultaneously by exposure to radiation.

2. A method as claimed in Claim 1, characterized in that the molten synthetic resin material used is a polyurethane acrylate compound.

3. A method as claimed in Claim 1 or 2, characterized in that the molten synthetic resin material comprises of from 0,1 to 2 % by weight of aluminium stearate.

4. A method as claimed in any of the Claims 1 to 3, characterized in that both synthetic resin layers are made to cure by means of electron radiation.

5. A method as claimed in any of the Claims 1 to 3, characterized in that the molten synthetic resin material comprises a light sensitive initiator, and that both synthetic resin layers are made to cure by means of radiation using UV-light.

6. A method as claimed in Claim 5, characterized in that the molten synthetic resin material comprises of from 1 to 5 % by weight of the light sensitive initiator which is selected from the group formed by 2,2-dimethoxy-2-phenylacetophenone, 2,2-diethoxy-acetophenone and 2,2-dimethyl-2-hydroxy-acetophenone.

## Revendications

1. Procédé pour la fabrication d'une fibre optique présentant un revêtement de matière synthétique qui est constitué par au moins deux couches, procédé selon lequel, immédiatement après sa formation, la fibre optique est munie de deux couches de matière synthétique, la deuxième couche de matière synthétique étant formée à partir d'une composition de matière synthétique durcissable qui est portée à durcissement par irradiation par des électrons ou par de la lumière ultraviolette, caractérisé en ce que la première couche en matière synthétique est formée par une matière synthétique fondue présentant au moins deux groupes d'esters d'acrylate par molécule, la deuxième couche de matière synthétique étant appliquée après que la première couche de matière synthétique s'est solidifiée par refroidissement, et la première couche de matière synthétique, ensemble avec la deuxième couche de matière synthétique, est portée à durcissement par irradiation.

2. Procédé selon la revendication 1, caractérisé en ce que comme matière synthétique fondue, on utilise un composé d'acrylate de polyuréthane.

3. Procédé selon la revendication 1 ou 2, caractérisé en ce que la matière synthétique fondue présente 0,1 à 2 % en poids de stéarate d'aluminium.

4. Procédé selon l'une des revendications 1 à 3, caractérisé en ce que les deux couches de matière synthétique sont portées à durcissement par irradiation par des électrons.

5. Procédé selon l'une des revendications 1 à 3, caractérisé en ce que la matière synthétique fondue présente un initiateur photosensible et que les deux couches de matière synthétiques sont portées à durcissement par irradiation par de la lumière ultraviolette.

6. Procédé selon la revendication 5, caractérisé en ce que la matière synthétique fondue contient 1 à 5 % en poids de l'initiateur photosensible qui est choisi dans le groupe constitué par la 2,2-diméthoxy-2-phénylacétophénone, la 2,2-diéthoxyacétophénone et la 2,2-diméthyl-2-hydroxyacétophénone.

FIG.1

$$CH_2=CH-\underset{\underset{O}{\|}}{C}-O-\left[\underset{\underset{CH_3}{|}}{CH}-CH_2-O-\underset{\underset{O}{\|}}{C}-NH-\text{Ph}-NH-\underset{\underset{O}{\|}}{C}-O-\left(CH_2-CH_2-O-\right.\right.$$

$$-\underset{\underset{O}{\|}}{C}-CH_2-CH_2-CH_2-CH_2-\underset{\underset{O}{\|}}{C}-O\right)_8 CH_2-CH_2-O-\underset{\underset{O}{\|}}{C}-NH-\text{Ph}-NH-$$

$$-\underset{\underset{O}{\|}}{C}-O\left[CH_2-\underset{\underset{CH_3}{|}}{CH}-O-\underset{\underset{O}{\|}}{C}-CH=CH_2\right]_m$$

## FIG.2

$$CH_2=CH-\underset{\underset{O}{\|}}{C}-O-CH_2-CH_2-O-\underset{\underset{O}{\|}}{C}-NH-\text{Ph}-NH-\underset{\underset{O}{\|}}{C}-O-\left(\underset{\underset{CH_3}{|}}{CH}-CH_2-O\right)_n$$

$$-\underset{\underset{O}{\|}}{C}-NH-\text{Ph}-NH-\underset{\underset{O}{\|}}{C}-CH_2-CH_2-O-\underset{\underset{O}{\|}}{C}-CH=CH_2$$

## FIG.3

FIG.4

FIG.5